# EUROPÄISCHE PATENTSCHRIFT

(11) **EP 1 882 075 B1**
(45) Veröffentlichungstag und Bekanntmachung des Hinweises auf die Patenterteilung: **18.12.2013**
(21) Anmeldenummer: 06754833.9
(22) Anmeldetag: 25.04.2006
(51) Int. Cl.: E05F 15/10

(54) **ANTRIEBSEINHEIT MIT EINEM GEHÄUSE**
DRIVE UNIT WITH A HOUSING
UNITÉ D'ENTRAINEMENT COMPORTANT UN LOGEMENT

(30) Priorität: 12.05.2005 DE 102005021950
(43) Veröffentlichungstag der Anmeldung: 30.01.2008
(73) Patentinhaber: ROBERT BOSCH GMBH, 70442 Stuttgart (DE)
(72) Erfinder: LAMPERT, Rico, 77880 Sasbach (DE); HUCK, Thomas, 77836 Rheinmuenster (DE); KRAUTH, Marco, 76547 Sinzheim (DE); BUEYUEKASIK, Diyap, 77815 Buehl (DE); MILI, Tarek, 76133 Karlsruhe (DE)
(86) Internationale Anmeldenummer: PCT/EP2006/061806
(87) Internationale Veröffentlichungsnummer: WO 2006/120118

(56) Entgegenhaltungen:
- DE-A1- 3 716 912
- DE-A1- 19 652 926
- US-A- 5 215 312
- US-A- 5 668 422
- US-A1- 2004 145 259

## Beschreibung

### Stand der Techhik

Die Erfindung betrifft eine Antriebseinheit mit einem Gehäuse wie es im Oberbegriff vom Anspruch 1 definiert wird, sowie ein Verfahren zur Herstellung einer solchen nach der Gattung der unabhängigen Ansprüche. Eine solche Autriebseinheit ist z.B aus der US 2004/014 5259 bekannt.

Mit der DE-OS 37 16 912 ist ein Gehäuse einer Antriebsvorrichtung bekannt geworden, bei der die die Öffnung verschließende Membran mit einem tellerförmigen Federelement in eine topfförmige Gehäuseeinsenkung gepresst ist. Zur Abdichtung ist zwischen der Membran und dem Federelement eine ringförmige Dichtung eingelegt. Das Federelement stützt sich dabei an der seitlichen Wand der Gehäuseeinsenkung ab und drückt dabei die Membran gegen das Gehäuse.

Ferner ist aus der DE-OS 196 35 180 bekannt, dass eine wasserdichte, luftdurchlässige Membran zumindest am Umfang einer Gehäuseöffnung an die Gehäusewand eines Getriebegehäuses angeschweißt ist.

Die oben genannten Lösungen zur Befestigung der Membran haben den Nachteil, dass ein zusätzliches Fixierelement gefertigt und montiert werden muss, oder ein zusätzlicher Prozessschritt zur Befestigung der Membran notwenig ist.

Mit der DE 3716912 A1 ist eine Antriebsvorrichtung bekannt geworden, bei der ein Getriebegehäuse eine Öffnung aufweist, die mit einer Membran abgedeckt ist. Dabei liegt die Membran an einem ringförmigen Bund an und wird mittels eines zusätzlichen Federelementes gegen diesen Bund verspannt.

Die US 2004/0145259 A1 zeigt einen Elektromotor, bei dem ein erstes zylindrisches Gehäuseteil einen Stator und einen Rotor aufnimmt. Das zylindrische Gehäuseteil wird bezüglich seiner Axialrichtung mittels einer Membran abgedeckt, die an einem Sensor aufliegt und mittels eines deckelförmigen weiteren Gehäuseteils abgedeckt wird. Mit der US-A-5215312 ist ein Gehäuse einer elektrischen Antriebseinheit bekannt geworden, bei der eine Öffnung im Gehäuse mittels einer Membran abgedeckt ist. Hierbei wird die Membran von einem separaten Halteelement aufgenommen, das in eine topfförmige Aufnahme in der Oberfläche des Gehäuses eingefügt wird.

### Vorteile der Erfindung

Die erfindungsgemäße Vorrichtung und das erfindungsgemäße Verfahren mit den Merkmalen der unabhängigen Ansprüche haben den Vorteil, dass durch das Anformen eines Bundes und einer Anlagefläche an zwei unterschiedlichen Gehäuseteilen des Gehäuses die Membran beim Verschließen des Gehäuses praktisch automatisch die Gehäuseöffnung zuverlässig abdichtet. Dabei wird der Bund und die Anlagefläche mit der dazwischen liegenden Membran derart zueinander positioniert, däss beim Verbinden der beiden Gehäuseteile die Membran wasserdicht zwischen dem Bund und die Anlagefläche eingespannt wird. Der Bund ist an einer vertikalen Wand des Gehäuseteils ausgebildet, die sich an der Bodenfläche des schalenförmigen Gehäuseteils abstützt. Damit können die Anpresskräfte durch die Anlagefläche beim Schließen des Gehäuses vom schalenförmigen Gehäuseteil direkt aufgenommen werden, ohne dass der Bund in seiner Position verschoben wird. Die Wand ist als Zylindermantel ausgebildet, der auf der Bodenfläche des Gehäuseteils angeformt ist. Zur Entlüftung sind in der zylindrischen Wand seitliche Öffnungen ausgespart, die eine Luftbewegung vom Gehäuseinnenraum zur Membran, und von dieser an die Umgebung ermöglicht.

Durch die in den Unteransprüchen ausgeführten Merkmale sind vorteilhafte Weiterbildungen der Vorrichtung und des Verfahrens nach den unabhängigen Ansprüchen möglich. Wird der Grundkörper des Gehäuses mit dem Deckel des Gehäuses mittels Verbindungselementen geschlossen, wird gleichzeitig mit der Anpresskraft der beiden Gehäuseteile zueinander auch die Anpresskraft aufgebracht, mit der die Membran zwischen dem Bund und der Anlagefläche eingepresst wird. Als Verbindungselemente eignen sich besonders Clips- oder Rastelemente, aber auch Schrauben oder Nieten. Alternativ können die beiden Gehäuseteile auch mittels Kleben, oder Schweißen derart miteinander verbunden werden, dass eine ausreichende Pressung zwischen dem Bund und der Anlagefläche erzeugt wird.

Zur Erhöhung der Dichtwirkung, bzw. zur Reduzierung der Anpresskraft ist zwischen der Membran und der Anlagefläche, oder zwischen der Membran und dem Bund ein Dichtelement vorgesehen, das die Membran wasserdicht gegen die Umgebung abdichtet.

Als Dichtelement kann beispielsweise ein konventioneller O-Ring verwendet werden, der als separates Bauteil zwischen dem Bund und der Anlagefläche eingelegt wird, bevor das Gehäuse verschlossen wird.

In einer bevorzugten Ausgestaltung der Erfindung ist das Dichtelement an zumindest einem der beiden Gehäuseteile befestigt. Beispielsweise wird das Dichtelement als Kunststoff- oder Gummi-Weichkomponente mittels eines zwei Komponenten-Spritzguss-Verfahren an die Hartkomponente (Gehäuseteil) angespritzt. Da für die Dichtfläche zwischen den beiden Gehäuseteilen ebenfalls eine Dichtung an eines der beiden Gehäuseteile angespritzt wird, ist für das Anformen des Dichtelements für die Membran kein zusätzlicher Arbeitsschritt notwendig. Die Abdichtung der Membran erfolgt dann in einem gemeinsamen Prozess, völlig analog zu der Abdichtung der beiden Gehäuseteile zueinander.

Von Vorteil ist es, wenn der Bund innerhalb der zylindrischen Wand als Ringfläche angeformt ist, die zusammen mit der zylindrischen Wand eine topfförmige Vertiefung bildet, in die die Membran eingelegt wird. Dadurch kann eine kreisrunde Membran sehr einfach positioniert werden. Ist die Anlagefläche an einem ringförmigen Fortsatz des anderen Gehäuseteils angeformt, kann die Anlagefläche ebenfalls sehr einfach gegenüber dem Bund justiert werden, indem der Fortsatz in die topfförmige Vertiefung eingreift. Damit kann ohne großen Konstruktionsaufwand eine zuverlässige Abdichtung der Membran erzeugt werden.

Damit bei der Montage der beiden Gehäuseteile zueinander die Membran zuverlässig zwischen den beiden Gehäuseteilen eingepresst wird, liegen die Anlagefläche und die korrespondierende Gegenfläche des Bundes etwa in der gleichen Ebene, wie die Trennebene zwischen den beiden Gehäuseteilen. Dadurch wird bei optimalem Abstand zwischen dem Bund und der Anlagefläche beim Verschließen des Gehäuses in Montagerichtung die maximale Anpresskraft für die Membran erzielt.

Besonders vorteilhaft kann die erfindungsgemäße Befestigung der Membran bei einem schalenförmigen Gehäuse realisiert werden, bei dem in einer Unterschale der komplette Elektromotor und das Getriebe angeordnet sind, bevor die Unterschale mit einer als Deckel ausgebildeten Oberschale verschließbar ist. Dabei werden die beiden Schalenelemente radial zur Ankerwelle zusammengefügt, wodurch gleichzeitig die Anlagefläche gegen die Membran und den Bund gepresst wird.

Das erfindungsgemäße Verfahren zum Herstellen einer Antriebseinheit hat den Vorteil, dass durch das Einlegen der Membran zusammen mit der Anordnung des Elektromotors und des Getriebes in dem ersten Gehäuseteil, ein zusätzlicher Montageschritt für die Befestigung der Membran entfällt. Beim Verbinden der beiden Gehäuseteile wird im selben Arbeitsschritt gleichzeitig die Membran zwischen den Bund und die Anlagefläche gespannt.

Ist das Dichtelement für die Membran einstückig an eines der beiden Gehäuseteile angeformt, ist für die Bereitstellung dieser Dichtung und für dessen Montage kein zusätzlicher Prozessschritt notwendig. Dabei kann das Dichtelement zum Beispiel an den Bund oder an die Anlagefläche angeformt werden, oder alternativ auch als separates Dichtelement zusammen mit der Membran eingelegt werden.

### Zeichnungen

In den Zeichnungen sind Ausführungsbeispiele einer erfindungsgemäßen Antriebsvorrichtung dargestellt und in der nachfolgenden Beschreibung näher erläutert. Es zeigen
- Figur 1: einen schematischen Schnitt durch ein Gehäuse einer erfindungsgemäßen Antriebsvorrichtung,
- Figur 2: einen Ausschnitt eines Gehäuses vor der Montage der Membran und
- Figur 3: ein weiteres Ausführungsbeispiel einer erfindungsgemäßen Antriebsvorrichtung im Schnitt.

### Beschreibung der Ausführungsbeispiele

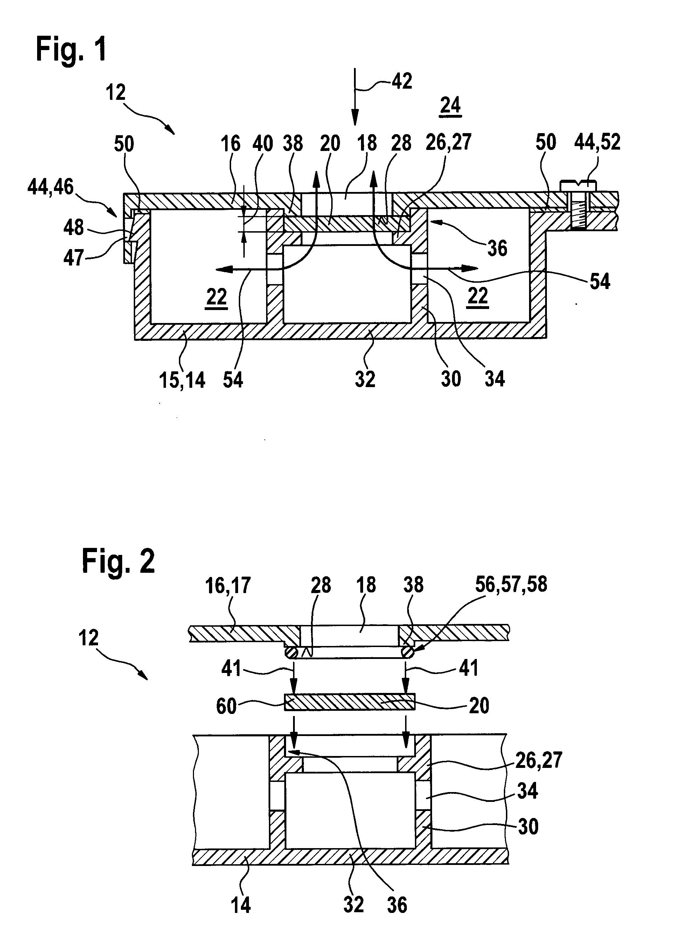

In Figur 1 ist ein Gehäuse 12 einer Antriebsvorrichtung 10 dargestellt, das ein erstes, unteres Gehäuseteil 14 und ein zweites, oberes Gehäuseteil 16 aufweist. Das Gehäuse 12 weißt eine Öffnung 18 auf, die mit einer gasdurchlässigen, flüssigkeitsundurchlässigen Membran 20 abgedeckt ist. Die Membran 20 ermöglicht den freien Gasdurchtritt von einem Gehäuseinnenraum 22 in die Umgebung 24, ohne dass Feuchtigkeit in den Gehäuseinnenraum eindringen kann. Als Material für die Membran 20 wird beispielsweise PTFE, insbesondere Gorotex, verwendet. Zur wasserdichten Befestigung der Membran 20 ist diese zwischen einem Bund 26 des ersten Gehäuseteils 14 und einer Anlagefläche 28 des zweiten Gehäuseteils 16 eingespannt. Der Bund 26 ist als ringförmige Fläche 27 ausgebildet, die in einer zylinderförmigen Wand 30 angeformt ist. Die zylinderförmige Wand 30 ist hier einstückig mit einer Bodenfläche 32 des ersten Gehäuseteils 14 ausgebildet, die als Zylindermantel ausgebildete Wand 30 weist Seitenöffnungen 34 auf, die als Durchbrüche ausgebildet sind, und den Gehäuseinnenraum 22 über die Membran 20 mit der Umgebung 24 verbinden. Hierzu sind in Figur 1 symbolisch Pfeile 54 eingezeichnet, die den Gasaustausch 54 zwischen der Umgebung 24 und dem Gehäuseinnenraum 22 über die Öffnung 18, die Membran 20, und die Seitenöffnungen 34 der Wand 30 dargestellen. Der Teil der Wand 30 oberhalb des Bundes 26 bildet mit diesem eine topfförmige Vertiefung 36, in die die Membran 20 eingelegt ist. Das zweite Gehäuseteil 16 weist einen ringförmigen Fortsatz 38 auf, an dem die ringförmige Anlagefläche 28 angeformt ist. In verschlossenem Zustand des Gehäuses 12 greift die Anlagefläche 28 über den Fortsatz 38 in die topfförmige Vertiefung 36 ein. Der Abstand 40 zwischen dem Bund 26 und der Anlagefläche 28 ist derart gewählt, dass beim Schließen des Gehäuses 12 in Montagerichtung 41 eine Anpresskraft 42 erzeugt wird, die die Membran 20 zwischen dem Bund 26 und der Anlagefläche 28 festklemmt. In Figur 1 ist das erste Gehäuseteil 14 als Gehäuseschale 15 ausgebildet, und wird mit dem zweiten Gehäuseteil 16 verschlossen, das als Deckel 17 ausgebildet ist. In der linken Bildhälfte sind die beiden Gehäuseteile 14, 16 mittels Verbindungselementen 44 miteinander verbunden, die als Clips- oder Rastelemente 46 ausgebildet sind. Am zweiten Gehäuseteil 16 sind Rastösen 47 ausgeformt, die beim Anpressen des Geshäuseteils 16 gegen das erste Gehäuseteil 14 in an diesem angeformten Rasthaken 48 einrasten. Zwischen dem ersten und dem zweiten Gehäuseteil 14 ,16 ist eine Dichtung 50 angeordnet, die beispielsweise an das zweite Gehäuseteil 16 angespritzt ist, und das Gehäuse 12 wasserdicht verschließt. Auf der rechten Seite in Figur 1 ist als Verbindungselement 44 eine Schraube 52 dargestellt, mit der das zweite Gehäuseteil 16 am ersten Gehäuseteil 14 befestigt ist. Die Konstruktion des Gehäuses 12 ist dabei so ausgelegt, dass mit dem Aufbringen der Verbindungskräfte durch die Verbindungselemente 44 eine ausreichende Anpresskraft 42 für die Membran 20 erzeugt wird.

Figur 2 zeigt eine Variation der Ausführung gemäß Figur 1, bei der zwischen der Membran 20 und der Anlagefläche 28 als ein Dichtelement 56 ein separates Bauteil 57 eingelegt wird. Das Dichtelement ist 56 beispielsweise als O-Ring 58 ausgebildet, der nach dem Einlegen der Membran 20 auf einen äußeren Umfangsbereich 60 der Membran 20 aufgelegt wird. Die Montagerichtung 41 ist durch die Pfeile 41 dargestellt, die in gleicher Richtung verlaufen, wie die Anpresskraft 42. Figur 2 veranschaulicht ebenfalls die Einfachheit des erfindungsgemäßen Herstellungsverfahrens. Die Membran 20 wird auf dem Bund 26 des ersten Gehäuseteils 14 angeordnet. Auf die Membran 20 wird gegebenenfalls ein Dichtelement 56, 58 aufgelegt und anschließend das zweite Gehäuseteil 16 mit dem ersten Gehäuseteil 14 verbunden. Alternativ zu den in Figur 1 dargestellten Verbindungselementen 44 kann das Gehäuse 12 auch mittels Kleben, Laserschweißen oder Ultraschallschweißen verschlossen werden. Durch die Schließkräfte zwischen den beiden Gehäuseteilen 14 und 16 werden dabei die Anpresskräfte 42 erzeugt, die die Membran 20 wasserdicht am Gehäuse 12 befestigen.

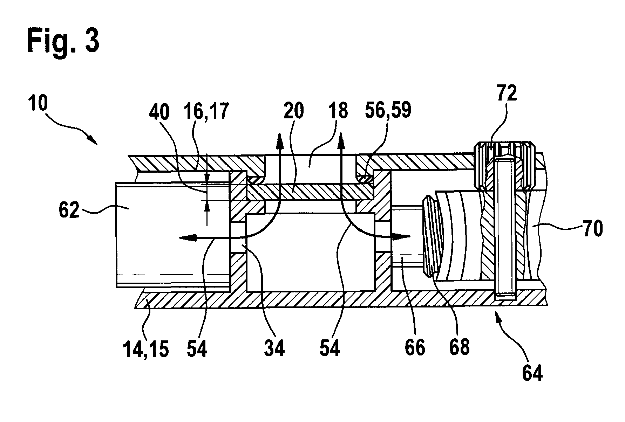

In einem weiteren Ausführungsbeispiel gemäß Figur 3 ist das Dichtelement 56 fest an das zweite Gehäuseteil 16 angeformt. Die beiden Gehäuseteile 14 und 16 sind beispielsweise aus Hartkunststoff ausgebildet, wobei an das zweite Gehäuseteil 16 mittels ZweiKomponenten-Spritzgießen eine dichtende Weichkomponente 59 angespitzt ist, die als Dichtelement 56 ausgebildet ist. Das Dichtelement 56 ist hierbei aus Kunststoff oder Gummi gebildet und wird in demselben Fertigungsprozess mit dem Anformen der Dichtung 50 an das zweite Gehäuseteil 14 ausgeführt. Gemäß Figur 3 ist das Dichtelement 56 direkt an die Anlagefläche 28 angeformt, so dass die Montage des Dichtelements 56 automatisch mit der Montage des zweiten Gehäuseteils 16 erfolgt. Für die Wahl des Abstandes 40 wird entsprechend die Abmessung des Dichtelementes 56 und die Dicke der Membran 20 berücksichtigt. In diesem Ausführungsbeispiel werden vor der Montage des zweiten Gehäuseteils 16 in das erste schalenförmige Gehäuseteil 14, 15 der komplette Elektromotor 62 mit einem sich daran anschließenden Getriebe 64 eingelegt. Das Drehmoment wird dabei über eine Ankerwelle 66, auf der eine Schnecke 68 angeordnet ist, auf ein Schneckenrad 70 übertragen, das wiederum ein Abtriebselement 72 antreibt. Mit diesem kann ein nicht näher dargstelltes bewegliches Teil im Kraftfahrzeug - beispielsweise eine Fensterscheibe oder ein Schiebedach - verstellt werden.

Es sei angemerkt, dass beide Gehäuseteile 14, 16 als näherungsweise gleiche Halbschalen 15 ausgebildet werden können. Auch die konkrete Ausformung des Bundes 26 und der Anlagefläche 28, sowie deren räumliche Anordnung kann an das Gehäuse 12, bzw. dessen Verbindungskräfte angepasst werden. Die Ausbildung und Anordnung des Dichtelements 56 kann ebenso wie die Wahl des geeigneten Verbindungsprozesses zwischen den Gehäuseteilen 14 und 16 variiert werden. Bevorzugt fmdet die Antriebsvorrichtung 10 Anwendung für das Verstellen von beweglichen Teilen im Kraftfahrzeug; ist jedoch nicht auf diese Anwendung beschränkt.

## Patentansprüche

1. Antriebseinheit (10), insbesondere zum Verstellen beweglicher Teile im Kraftfahrzeug, mit einem Gehäuse (12), das eine Öffnung (18) zur Umgebung (24) aufweist, an der eine gasdurchlässige, flüssigkeitsundurchlässige Membran (20) anliegt, **wobei** das Gehäuse (12) ein erstes Gehäuseteil (14) mit einem umlaufenden Bund (26) und ein zweites, das erste Gehäuseteil (14) abschließendes Gehäuseteil (16) aufweist, **dadurch gekennzeichnet, dass** an dem zweiten Gehäuseteil (16) die Öffnung mit einer umlaufenden Anlagefläche (28) angeformt ist, die die Membran (20) nach dem Schließen des Gehäuses (12) gegen den Bund (26) des ersten Gehäuseteils (14) presst, **wobei der Bund (26) und/oder die Anlagefläche (28) an einer Wand (30) des Gehäuseteils (14, 16) angeformt ist, die sich an einer Bodenfläche (32) des Gehäuseteils (14, 16) abstützt und die Wand (30) des Gehäuseteils (14, 16) zylinderförmig ausgebildet ist und mindestens eine seitliche Lüftungsöffnung (34) vom Gehäuseinnenraum (22) zur Öffnung (18) aufweist**

2. Antriebseinheit (10) nach Anspruch 1, **dadurch gekennzeichnet, dass** das erste und das zweite Gehäuseteil (14, 16) mittels Verbindungselementen (44, 46, 52), wie bspw. Rastelementen (46), Schrauben (52), Nieten, oder beziehungsweise mittels Verbindungsprozesse wie Kleben, Laser- oder Ultraschallschweißen wasserdicht miteinander verbunden sind.

3. Antriebseinheit (10) nach einem der Ansprüche 1 oder 2, **dadurch gekennzeichnet, dass** zwischen der Membran (20) und dem Bund (26) und/oder der Anlagefläche (28) ein Dichtelement (56, 58, 59) angeordnet ist, wobei der Bund (26) und die Anlagefläche (28) insbesondere ringförmig ausgebildet sind.

4. Antriebseinheit (10) nach einem der vorhergehenden Ansprüche, **dadurch gekennzeichnet, dass** das Dichtelement (56) als separates Bauteil (57, 58) - insbesondere als O-Ring - ausgebildet ist.

5. Antriebseinheit (10) nach einem der vorhergehenden Ansprüche, **dadurch gekennzeichnet, dass** das Dichtelement (56, 58, 59) am ersten und/oder am zweiten Gehäuseteil (14, 16) - insbesondere mittels 2-Kompenenten-Spritz-Verfahren - angeformt ist.

6. **Antriebseinheit (10) nach einem der vorhergehenden Ansprüche, dadurch gekennzeichnet, dass die Wand (30) einstückig mit der Bodenfläche (32) ausgebildet ist.**

7. **Antriebseinheit (10) nach einem der vorhergehenden Ansprüche, dadurch gekennzeichnet, dass die beiden Gehäuseteile (14 und 16) aus Hartkunststoff ausgebildet sind, wobei das Dichtelement (56) aus. Kunststoff oder Gummi gebildet ist und in demselben Fertigungsprozess mit dem Anformen einer Dichtung (50) an das zweite Gehäuseteil (14) ausgeführt ist.**

8. Antriebseinheit (10) nach einem der vorhergehenden Ansprüche, **dadurch gekennzeichnet, dass** der Bund (26) als eine topfförmige Vertiefung (36) innerhalb der zylinderförmigen Wand (30) des ersten Gehäuseteils (14) ausgebildet ist, wobei die Anlagefläche (28) nach der Montages des zweiten Gehäuseteils (16) in die topfförmige Vertiefung (36) eingreift.

9. Antriebseinheit (10) nach einem der vorhergehenden Ansprüche, **dadurch gekennzeichnet, dass** der Bund (26) und die Anlagefläche (28) in einer Ebene, näherungsweise senkrecht zur Montagerichtung (41) der beiden Gehäuseteile (14, 16) angeordnet ist.

10. Antriebseinheit (10) nach einem der vorhergehenden Ansprüche, **dadurch gekennzeichnet, dass** zumindest eines der beiden Gehäuseteile (14, 16) als Schalenelement (15) ausgebildet ist, das einen Elektromotor (62) und ein über eine Ankerwelle (66) angetriebenes Getriebe (64) aufnimmt, und mit dem anderen Gehäuseteil (14, 16) radial zur Ankerwelle (66) des Elektromotors (62) verschließbar ist.

11. Verfahren zum Herstellen einer Antriebseinheit (10) mit einem ersten und zweiten Gehäuseteil (14, 16) nach einer der vorhergehenden Ansprüche, mit folgenden Schritten:
- ein Elektromotor (62) und ein Getriebe (64) werden in des erste Gehäuseteil (14, 15) eingelegt
- eine gasdurchlässige, flüssigkeitsundurchlässige Membran (20) wird auf einem ringförmigen Bund (26) des ersten Gehäuseteils (14, 15) angeordnet
- das zweite Gehäuseteil (16) wird zum Verschließen des Gehäuses (12) als Deckel (17) auf dem ersten Gehäuseteil (14, 15) angeordnet, wobei eine um eine Öffnung (18) im zweiten Gehäuseteil (16) umlaufende Anlagefläche (28) für die Membran (20) deckungsgleich zum Bund (26) positioniert wird, **wobei der Bund: (26) und/oder die Anlagefläche (28) an einer Wand (30) des Gehäuseteils (14, 16) angeformt ist, die sich an einer Bodenfläche (28) des Gehäuseteils (14, 16) abstützt und die Wand (30) des Gehäuseteils (14, 16) zylinderförmig ausgebildet ist und mindestens eine seitliche Lüftungsöffnung (34) vom Gehäuseinnenraum (22) zur Öffnung (18) aufweist.**
die beiden Gehäuseteile (14,16) werden wasserdicht miteinander verbunden, wodurch die Membran (20) wasserdicht zwischen dem Bund (26) und der Anlagefläche (28) eingepresst wird.

12. Verfahren nach Anspruch 11, **dadurch gekennzeichnet, dass** unter oder über der Membran (20) ein Dichtungselement (56, 57, 58, 59) angeordnet wird, das nach dem Verschließen der beiden Gehäuseteile (14, 16) die Membran (20) wasserdicht gegenüber dem Bund (26), beziehungsweise gegenüber der Anlagefläche (28), abdichtet.

## Claims

1. Drive unit (10), in particular for adjusting movable parts in a motor vehicle, having a housing (12) with an opening (18) which is open to the surroundings (24) and against which a gas-permeable, liquid-impermeable membrane (20) butts, wherein the housing (12) has a first housing part (14), with an encircling collar (26), and a second housing part (16), which closes off the first housing part (14), **characterized in that** the second housing part (16) contains the opening with an encircling abutment surface (28), the latter pressing the membrane (20) against the collar (26) of the first housing part (14) once the housing (12) has been closed, wherein the collar (26) and/or the abutment surface (28) are/is formed on a wall (30) which belongs to the housing part (14, 16) and is supported on a floor surface (32) of the housing part (14, 16), and the wall (30) of the housing part (14, 16) is of cylindrical design and has at least one lateral venting opening (34) from the housing interior (22) to the opening (18).

2. Drive unit (10) according to Claim 1, **characterized in that** the first and the second housing parts (14, 16) are connected to one another in a water-tight manner by means of connecting elements (44, 46, 52), for example latching elements (46), screws (52) or rivets, and/or by means of connecting processes, such as adhesive bonding, laser welding or ultrasonic welding.

3. Drive unit (10) according to either of Claims 1 and 2, **characterized in that** a sealing element (56, 58, 59) is arranged between the membrane (20) and the collar (26) and/or the abutment surface (28), wherein the collar (26) and the abutment surface (28) are, in particular, of annular design.

4. Drive unit (10) according to one of the preceding claims, **characterized in that** the sealing element (56) is designed as a separate component (57, 58) - in particular as an 0-ring.

5. Drive unit (10) according to one of the preceding claims, **characterized in that** the sealing element (56, 58, 59) is formed on the first and/or on the second housing part (14, 16) - in particular by means of two-component injection moulding.

6. Drive unit (10) according to one of the preceding claims, **characterized in that** the wall (30) is formed in one piece with the floor surface (32).

7. Drive unit (10) according to one of the preceding claims, **characterized in that** the two housing parts (14 and 16) are formed from hard plastics material, wherein the sealing element (56) is formed from plastics material or rubber, in the same production process as a seal (50) is provided on the second housing part (14).

8. Drive unit (10) according to one of the preceding claims, **characterized in that** the collar (26) is designed as a cup-like depression (36) within the cylindrical wall (30) of the first housing part (14), wherein the abutment surface (28) engages in the cup-like depression (36) once the second housing part (16) has been fitted.

9. Drive unit (10) according to one of the preceding claims, **characterized in that** the collar (26) and the abutment surface (28) are arranged in a plane more or less perpendicularly to the fitting direction (41) of the two housing parts (14, 16).

10. Drive unit (10) according to one of the preceding claims, **characterized in that** at least one of the two housing parts (14, 16) is designed as a shell element (15) which accommodates an electric motor (62) and a gear mechanism (64), driven via an armature shaft (66), and can be closed by the other housing part (14, 16) in a direction radial to the armature shaft (66) of the electric motor (62).

11. Method for producing a drive unit (10) with a first and second housing part (14, 16) according to one of the preceding claims, having the following steps:
- an electric motor (62) and a gear mechanism (64) are introduced into the first housing part (14, 15),
- a gas-permeable, liquid-impermeable membrane (20) is arranged on an annular collar (26) of the first housing part (14, 15),
- the second housing part (16), for the purpose of closing the housing (12), is arranged as a lid (17) on the first housing part (14, 15), wherein an abutment surface (28) for the membrane (20), said abutment surface running around an opening (18) in the second housing part (16), is positioned congruently in relation to the collar (26), wherein the collar (26) and/or the abutment surface (28) are/is formed on a wall (30) which belongs to the housing part (14, 16) and is supported on a floor surface (28) of the housing part (14, 16), and the wall (30) of the housing part (14, 16) is of cylindrical design and has at least one lateral venting opening (34) from the housing interior (22) to the opening (18),
- the two housing parts (14, 16) are connected to one another in a water-tight manner, as a result of which the membrane (20) is pressed in in a water-tight manner between the collar (26) and the abutment surface (28).

12. Method according to Claim 11, **characterized by** the arrangement, beneath or above the membrane (20), of a sealing element (56, 57, 58, 59) which, once the two housing parts (14, 16) have been closed, seals the membrane (20) in a water-tight manner in relation to the collar (26), and/or in relation to the abutment surface (28).

## Revendications

1. Unité d'entraînement (10), en particulier pour le déplacement de pièces mobiles dans un véhicule automobile, comprenant un boîtier (12) qui présente une ouverture (18) vers l'environnement extérieur (24), contre laquelle s'applique une membrane perméable aux gaz et imperméable aux liquides (20), le boîtier (12) présentant une première partie de boîtier (14) avec un épaulement périphérique (26) et une deuxième partie de boîtier (16) fermant la première partie de boîtier (14), **caractérisée en ce que** l'ouverture est façonnée sur la deuxième partie de boîtier (16) avec une surface d'appui périphérique (28), laquelle presse la membrane (20) après la fermeture du boîtier (12) contre l'épaulement (26) de la première partie de boîtier (14, 16), l'épaulement (26) et/ou la surface d'appui (28) étant façonné(e) au niveau d'une paroi (30) de la partie de boîtier (14, 16) qui s'appuie contre une surface de fond (32) de la partie de boîtier (14, 16) et la paroi (30) de la partie de boîtier (14, 16) étant réalisée sous forme cylindrique et présentant au moins une ouverture d'aération latérale (34) depuis l'espace interne du boîtier (22) jusqu'à l'ouverture (18).

2. Unité d'entraînement (10) selon la revendication 1, **caractérisée en ce que** la première et la deuxième partie de boîtier (14, 16) sont connectées l'une à l'autre de manière étanche à l'eau au moyen d'éléments de liaison (44, 46, 52), comme par exemple des éléments d'encliquetage (46), des vis (52), des rivets ou, respectivement, au moyen de processus d'assemblage tels qu'un collage, un soudage laser ou un soudage par ultrasons.

3. Unité d'entraînement (10) selon l'une quelconque des revendications 1 ou 2, **caractérisée en ce qu'**entre la membrane (20) et l'épaulement (26) et/ou la surface d'appui (28) est disposé un élément d'étanchéité (56, 58, 59), l'épaulement (26) et la surface d'appui (28) étant réalisés notamment sous forme annulaire.

4. Unité d'entraînement (10) selon l'une quelconque des revendications précédentes, **caractérisée en ce que** l'élément d'étanchéité (56) est réalisé sous forme de composant séparé (57, 58), en particulier sous forme de joint torique.

5. Unité d'entraînement (10) selon l'une quelconque des revendications précédentes, **caractérisée en ce que** l'élément d'étanchéité (56, 58, 59) est façonné au niveau de la première et/ou de la deuxième partie de boîtier (14, 16), en particulier au moyen d'un procédé de pulvérisation à deux composants.

6. Unité d'entraînement (10) selon l'une quelconque des revendications précédentes, **caractérisée en ce que** la paroi (30) est réalisée d'une seule pièce avec la surface de fond (32).

7. Unité d'entraînement (10) selon l'une quelconque des revendications précédentes, **caractérisée en ce que** les deux parties de boîtier (14 et 16) sont réalisées en plastique dur, l'élément d'étanchéité (56) étant formé de plastique ou de caoutchouc et étant réalisé au cours du même processus de fabrication avec le façonnage d'un joint d'étanchéité (50) sur la deuxième partie de boîtier (14).

8. Unité d'entraînement (10) selon l'une quelconque des revendications précédentes, **caractérisée en ce que** l'épaulement (26) est réalisé sous forme de renfoncement en forme de pot (36) à l'intérieur de la paroi cylindrique (30) de la première partie de boîtier (14), la surface d'appui (28) venant en prise dans le renfoncement en forme de pot (36) après le montage de la deuxième partie de boîtier (16).

9. Unité d'entraînement (10) selon l'une quelconque des revendications précédentes, **caractérisée en ce que** l'épaulement (26) et la surface d'appui (28) sont disposés dans un plan, approximativement perpendiculairement à la direction de montage (41) des deux parties de boîtier (14, 16).

10. Unité d'entraînement (10) selon l'une quelconque des revendications précédentes, **caractérisée en ce qu'**au moins l'une des deux parties de boîtier (14, 16) est réalisée sous forme d'élément de coque (15), qui reçoit un moteur électrique (62) et une transmission (64) entraînée par le biais d'un arbre d'induit (66), et peut être fermée radialement par rapport à l'arbre d'induit (66) du moteur électrique (62) avec l'autre partie de boîtier (14, 16).

11. Procédé de fabrication d'une unité d'entraînement (10) comprenant une première et une deuxième partie de boîtier (14, 16) selon l'une quelconque des revendications précédentes, comprenant les étapes suivantes :
- un moteur électrique (62) et une transmission (64) sont installés dans la première partie de boîtier (14, 15),
- une membrane perméable aux gaz et imperméable aux liquides (20) est disposée sur un épaulement annulaire (26) de la première partie de boîtier (14, 15),
- la deuxième partie de boîtier (16) est disposée, sous forme de couvercle (17), sur la première partie de boîtier (14, 15) pour fermer le boîtier (12), une surface d'appui périphérique (28) pour la membrane (20) autour d'une ouverture (18) dans la deuxième partie de boîtier (16) étant positionnée en affleurement avec l'épaulement (26), l'épaulement (26) et/ou la surface d'appui (28) étant façonné(e) au niveau d'une paroi (30) de la partie de boîtier (14, 16) qui s'appuie au niveau d'une surface de fond (28) de la partie de boîtier (14, 16) et la paroi (30) de la partie de boîtier (14, 16) étant réalisée sous forme cylindrique et présentant au moins une ouverture d'aération latérale (34) depuis l'espace interne du boîtier (22) jusqu'à l'ouverture (18),
- les deux parties de boîtier (14, 16) sont connectées l'une à l'autre de manière étanche à l'eau de sorte que la membrane (20) soit pressée de manière imperméable à l'eau entre l'épaulement (26) et la surface d'appui (28).

12. Procédé selon la revendication 11, **caractérisé en ce qu'**en dessous ou au-dessus de la membrane (20) est disposé un élément d'étanchéité (56, 57, 58, 59), lequel, après la fermeture des deux parties de boîtier (14, 16), ferme hermétiquement la membrane (20) de manière étanche à l'eau par rapport à l'épaulement (26), respectivement par rapport à la surface d'appui (28).
